# EUROPEAN PATENT SPECIFICATION

(11) **EP 3 258 655 B1**
(45) Date of publication and mention of the grant of the patent: **04.09.2019**
(21) Application number: 15884256.7
(22) Date of filing: 11.03.2015
(51) Int. Cl.: H04L 12/24, H04L 29/08

(54) **METHOD AND APPARATUS FOR DETERMINING NSD TO BE UPLOADED**
VERFAHREN UND VORRICHTUNG ZUR BESTIMMUNG EINER HOCHZULADENDEN NSD
PROCÉDÉ ET APPAREIL POUR DÉTERMINER UN NSD À TÉLÉVERSER

(43) Date of publication of application: 20.12.2017
(73) Proprietor: Huawei Technologies Co., Ltd., Longgang District Shenzhen, Guangdong 518129 (CN)
(72) Inventor: LIU, Jianning, Shenzhen Guangdong 518129 (CN)
(74) Representative: Epping - Hermann - Fischer
(86) International application number: PCT/CN2015/074020
(87) International publication number: WO 2016/141573

(56) References cited:
- CN-A- 104 219 127
- CN-A- 104 243 301
- Sleiman Rabah: "A RESOURCE PUBLICATION AND DISCOVERY FRAMEWORK AND BROKER-BASED ARCHITECTURE FOR NETWORK VIRTUALIZATION ENVIRONMENT", , 1 January 2014 (2014-01-01), pages 1-160, XP055429570, Retrieved from the Internet: URL:https://spectrum.library.concordia.ca/ 978130/4/Rabah_MASc_S2014.pdf [retrieved on 2017-11-28]
- "Network Functions Virtualisation (NFV); Management and Orchestration", GROUP SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. NFV MAN, no. V1.1.1, 1 December 2014 (2014-12-01), XP014235740,

## Description

### TECHNICAL FIELD

The present invention relates to the field of communications technologies, and in particular, to a method and an apparatus for determining a to-be-uploaded NSD.

### BACKGROUND

Initiated by thirteen main telecommunications operators in the world, NFV (Network Function Virtualization, network function virtualization) is an organization in which numerous device vendors, IT (Information Technology, information technology) vendors, and the like participate. The NFV is intended to define a requirement of operator network functions virtualization and a related technical report, and expects to implement some network functions in a software form by means of an IT virtualization technology and using a general high-performance and large-capacity server, a switch, and a storage device. For example, software and hardware separation may be implemented by using an NFV technology for various network devices such as a server, a router, a storage device CDN (Content Delivery Network, content delivery network), and a switch. These network devices may be deployed in a data center, on a network node, in a user's home, or the like.

If an NS (Network Service, network service) needs to be implemented in the NFV, an NSD (Network Service Descriptor, network service descriptor) generally needs to be uploaded and instantiated.

Currently, an NSD is generally planned and designed offline by an operator or an NS design vendor, and passing a test, the NSD is uploaded to an NFV orchestrator (NFVO, network function virtualization orchestrator). That is, if an operator needs to upload an NSD, the NSD needs to be generated before being uploaded. However, it usually takes a relatively long time to generate an NSD. Apparently, when there is a service requirement, an NSD needs to be generated before being uploaded. Consequently, a relatively long time is required, and network service generation efficiency is reduced.

Sleiman Rabah, "A RESOURCE PUBLICATION AND DISCOVERY FRAMEWORK AND BROCKER-BASED ARCHITECTURE FOR NETWORK VIRTUALIZATION ENVIRONMENT", 1 January 2014 (2014-01-01), discusses a broker-based architecture that provides functions for publishing, discovering and negotiating as well as instantiating and managing resources in network virtualization environment. An information model is proposed that assists various providers in describing the resources and services they offer and a proof of concept is implemented prototype to demonstrate the feasibility of the proposed architecture. Moreover, experiments are conducted to evaluate the performance and the scalability of the implemented system.

"Network Functions Virtualization (NFV); Management and Orchestration", GROUP SPECIFICATION, EUROPEAN TELECOMMUNICATIONS STANDARDS INSTITUTE (ETSI), 650, ROUTE DES LUCIOLES; F-06921 SOPHIA-ANTIPOLIS; FRANCE, vol. NFV MAN, no. V1.1.1, 1 December 2014 (2014-12-01), describes the management and orchestration framework required for the provisioning of virtualized network functions (VNF), and the related options, such as the configuration of the virtualized network functions and the infrastructure these functions run on. It is focused on aspects of management and orchestration that are specific to NFV. The topics of management and orchestration addressed are: architecture framework for management and orchestration of NFV, information elements, interfaces, provisioning, configuration and operational management, including interworking with existing operations and management systems.

### SUMMARY

According to the present invention there is provided a method according to claim 1, and an apparatus according to claim 5. Embodiments are further defined by the dependent claims.

Embodiments of the present invention provide a method and an apparatus for determining a to-be-uploaded NSD, so as to resolve a technical problem of relatively low network service generation efficiency.

According to a first aspect of the present invention, a method for determining a to-be-uploaded NSD, that is performed by an NS pool, is provided, including:
receiving a request message, where the request message is used to request to obtain NSD information;
searching, according to an NSD feature parameter carried in the request message, stored NSDs for NSD information that meets the NSD feature parameter;
sending the found NSD information to a transmit end of the request message, so that the transmit end determines a to-be-uploaded NSD according to the found NSD information;
the NSD information is NSD description information or an NSD;
after the sending the found NSD information to a transmit end of the request message, the method further comprises:
   receiving an upload confirmation message, comprising a first NSD information, that is sent by the transmit end and that is used to confirm uploading of an NSD corresponding to first NSD information, where the first NSD information is one piece of information in the found NSD information; and
   uploading the NSD corresponding to the first NSD information to a Network Function Virtualization Orchestrator, NFVO.

With reference to the first aspect, in a firstpossible implementation of the first aspect, the sending the found NSD information to a transmit end of the request message includes:
sending all or some of the found NSD information to the transmit end of the request message.

With reference to the first possible implementation of the first aspect, in a second possible implementation of the first aspect, the sending some of the found NSD information to the transmit end of the request message includes:
selecting the first NSD information from the found NSD information; and
sending the first NSD information to the transmit end of the request message.

With reference to any one of the first aspect or the first possible implementation to the second possible implementation of the first aspect, in a third possible implementation of the first aspect, the method further includes:
receiving at least one NSD sent by a transmit end, and storing the received NSD.

According to a second aspect as an example usefull for understanding the invention, a method for determining a to-be-uploaded NSD is provided, including:
sending a request message, where the request message is used to request to obtain NSD information; and
receiving NSD information, and determining a to-be-uploaded NSD according to the received NSD information.

With reference to the second aspect, in a first possible implementation of the second aspect, the NSD information is NSD description information or an NSD.

With reference to the first possible implementation of the second aspect, in a second possible implementation of the second aspect, after the determining a to-be-uploaded NSD according to the received NSD information, the method further includes:
sending, to a receive end of the request message, an upload confirmation message used to confirm uploading of an NSD corresponding to first NSD information, where the first NSD information is one piece of information in the received NSD information.

With reference to the second possible implementation of the second aspect, in a third possible implementation of the second aspect, when the NSD information is NSD description information, after the sending, to a receive end of the request message, an upload confirmation message, the method further includes:
receiving the NSD that is corresponding to the first NSD information and that is sent by the receive end of the request message; and
uploading the received NSD.

With reference to the second aspect, or the first possible implementation, or the second possible implementation, or the third possible implementation of the second aspect, in a fourth possible implementation of the second aspect, the method further includes:
sending an NSD to the receive end of the request message, so that the receive end of the request message stores the received NSD.

According to a third aspect of the present invention, an apparatus for determining a to-be-uploaded NSD is provided, including:
a receiving module, configured to receive a request message, where the request message is used to request to obtain NSD information;
a search module, configured to search, according to an NSD feature parameter carried in the request message, stored NSDs for NSD information that meets the NSD feature parameter;
a sending module, configured to send the found NSD information to a transmit end of the request message, so that the transmit end is able to determine a to-be-uploaded NSD according to the found NSD information;
the NSD information is NSD description information or an NSD;
the receiving module is further configured to: after the found NSD information is sent to the transmit end of the request message, receive an upload confirmation message, comprising a first NSD information, that is sent by the transmit end and that is used to confirm uploading of an NSD corresponding to first NSD information, where the first NSD information is one piece of information in the found NSD information; and
an upload module, is configured to upload module is configured to upload the NSD corresponding to the first NSD information to the NFVO.

With reference to the third aspect, in a first possible implementation of the third aspect, the sending module is specifically configured to:
send all or some of the found NSD information to the transmit end of the request message.

With reference to the first possible implementation of the third aspect, in a second possible implementation of the third aspect, that the sending module is specifically configured to send some of the found NSD information to the transmit end of the request message is specifically:
selecting the first NSD information from the found NSD information; and
sending the first NSD information to the transmit end of the request message.

With reference to any one of the third aspect or the first possible implementation to the second possible implementation of the third aspect, in a third possible implementation of the third aspect, the receiving module is further configured to:
receive at least one NSD sent by a transmit end, and store the received NSD.

According to a fourth aspect as an example usefull for understanding the invention, an apparatus for determining a to-be-uploaded NSD is provided, including:
a sending module, configured to send a request message, where the request message is used to request to obtain NSD information; and
a receiving module, configured to receive NSD information, and determine a to-be-uploaded NSD according to the received NSD information.

With reference to the fourth aspect, in a first possible implementation of the fourth aspect, the NSD information is NSD description information or an NSD.

With reference to the first possible implementation of the fourth aspect, in a second possible implementation of the fourth aspect, the sending module is further configured to:
after the receiving module determines the to-be-uploaded NSD according to the received NSD information, send, to a receive end of the request message, an upload confirmation message used to confirm uploading of an NSD corresponding to first NSD information, where the first NSD information is one piece of information in the received NSD information.

With reference to the second possible implementation of the fourth aspect, in a third possible implementation of the fourth aspect, the apparatus further includes an upload module, and when the NSD information is NSD description information,
the receiving module is further configured to: after the sending module sends the upload confirmation message to the receive end of the request message, receive the NSD that is corresponding to the first NSD information and that is sent by the receive end of the request message; and
the upload module is configured to upload the received NSD.

With reference to the fourth aspect, or the first possible implementation, or the second possible implementation, or the third possible implementation of the fourth aspect, in a fourth possible implementation of the fourth aspect, the sending module is further configured to:
send an NSD to the receive end of the request message, so that the receive end of the request message stores the received NSD.

According to a fifth aspect of the present invention, an apparatus for determining a to-be-uploaded NSD is provided, including a memory, a processor, a receiver, and a transmitter that are connected to a same bus, where
the memory is configured to store an instruction;
the receiver is configured to receive a request message, where the request message is used to request to obtain NSD information; and
the processor is configured to execute the instruction, search, according to an NSD feature parameter carried in the request message, stored NSDs for NSD information that meets the NSD feature parameter, and send, by using the transmitter, the found NSD information to a transmit end of the request message, so that the transmit end determines a to-be-uploaded NSD according to the found NSD information.

With reference to the fifth aspect, in a first possible implementation of the fifth aspect, the NSD information is NSD description information or an NSD.

With reference to the first possible implementation of the fifth aspect, in a second possible implementation of the fifth aspect,
the receiver is further configured to: after the processor sends, by using the transmitter, the found NSD information to the transmit end of the request message, receive an upload confirmation message that is sent by the transmit end and that is used to confirm uploading of an NSD corresponding to first NSD information, where the first NSD information is one piece of information in the found NSD information; and
the processor is further configured to upload the NSD corresponding to the first NSD information.

With reference to the first possible implementation of the fifth aspect, in a third possible implementation of the fifth aspect, when the NSD information is NSD description information,
the receiver is further configured to: after the processor sends, by using the transmitter, the found NSD information to the transmit end, receive an upload confirmation message that is sent by the transmit end and that is used to confirm uploading of an NSD corresponding to first NSD information, where the first NSD information is one piece of information in the found NSD information; and
the processor is further configured to send, by using the transmitter, the NSD corresponding to the first NSD information to the transmit end, so that the transmit end uploads the NSD corresponding to the first NSD information.

With reference to the first possible implementation, or the second possible implementation, or the third possible implementation of the fifth aspect, in a fourth possible implementation of the fifth aspect, that the processor is configured to send, by using the transmitter, the found NSD information to a transmit end of the request message is specifically:
sending, by using the transmitter, all or some of the found NSD information to the transmit end of the request message.

With reference to the fourth possible implementation of the fifth aspect, in a fifth possible implementation of the fifth aspect, that the processor is specifically configured to send, by using the transmitter, some of the found NSD information to the transmit end of the request message is specifically:
selecting the first NSD information from the found NSD information; and
sending the first NSD information to the transmit end of the request message by using the transmitter.

With reference to any one of the fifth aspect or the first possible implementation to the fifth possible implementation of the fifth aspect, in a sixth possible implementation of the fifth aspect,
the receiver is further configured to receive at least one NSD sent by a transmit end; and
the processor is further configured to store the received NSD.

According to a sixth aspect as an example usefull for understanding the invention, an apparatus for determining a to-be-uploaded NSD is provided, including a memory, a processor, a receiver, and a transmitter that are connected to a same bus, where
the memory is configured to store an instruction;
the processor is configured to execute the instruction, and send a request message by using the transmitter, where the request message is used to request to obtain NSD information;
the receiver is configured to receive NSD information; and
the processor is further configured to determine a to-be-uploaded NSD according to the received NSD information.

With reference to the sixth aspect, in a first possible implementation of the sixth aspect, the NSD information is NSD description information or an NSD.

With reference to the first possible implementation of the sixth aspect, in a second possible implementation of the sixth aspect, the processor is further configured to:
after determining the to-be-uploaded NSD according to the received NSD information, send, to a receive end of the request message by using the transmitter, an upload confirmation message used to confirm uploading of an NSD corresponding to first NSD information, where the first NSD information is one piece of information in the received NSD information.

With reference to the second possible implementation of the sixth aspect, in a third possible implementation of the sixth aspect, when the NSD information is NSD description information,
the receiver is further configured to: after the processor sends the upload confirmation message to the receive end of the request message by using the transmitter, receive the NSD that is corresponding to the first NSD information and that is sent by the receive end of the request message; and
the processor is further configured to upload the received NSD.

With reference to the sixth aspect, or the first possible implementation, or the second possible implementation, or the third possible implementation of the sixth aspect, in a fourth possible implementation of the sixth aspect, the processor is further configured to:
send an NSD to the receive end of the request message by using the transmitter, so that the receive end of the request message stores the received NSD.

In the embodiments of the present invention, for example, a method for determining a to-be-uploaded NSD may be executed by a specific module, and the module stores, for example, at least one NSD. When a sender (a transmit end) needs to upload an NSD, it is only required to search the module for NSDs that meet a requirement. If there are NSDs that meet the requirement, a to-be-uploaded NSD may be directly determined from the NSDs, and the NSD may be directly uploaded after being determined. A specific module is provided to execute the method for determining a to-be-uploaded NSD, and NSDs are pre-stored in the module. When an NSD needs to be uploaded, an appropriate NSD may be directly selected from the NSDs for uploading; and when there is a service requirement, an NSD does not need to be generated before being uploaded. Therefore, a time required for uploading an NSD is reduced, and network service generation efficiency is improved. Especially when there is an urgent service requirement, the technical solutions in the embodiments of the present invention can achieve a better effect. When there is an urgent service requirement, uploading of an NSD generally needs to be completed as soon as possible, and apparently, the requirement can be met by using the technical solutions in the embodiments of the present invention. Therefore, network service generation efficiency is improved, and user experience is enhanced.

### BRIEF DESCRIPTION OF DRAWINGS

FIG. 1 is a possible architecture diagram of an NFV E2E in an embodiment of the present invention;
FIG. 2 is a main flowchart of a method for determining a to-be-uploaded NSD in an embodiment of the present invention;
FIG. 3 is a main flowchart of another method for determining a to-be-uploaded NSD in an embodiment of the present invention;
FIG. 4 is a structural block diagram of an apparatus for determining a to-be-uploaded NSD in an embodiment of the present invention;
FIG. 5 is a structural block diagram of another apparatus for determining a to-be-uploaded NSD in an embodiment of the present invention;
FIG. 6 is a schematic structural diagram of an apparatus for determining a to-be-uploaded NSD in an embodiment of the present invention; and
FIG. 7 is a schematic structural diagram of another apparatus for determining a to-be-uploaded NSD in an embodiment of the present invention.

### DESCRIPTION OF EMBODIMENTS

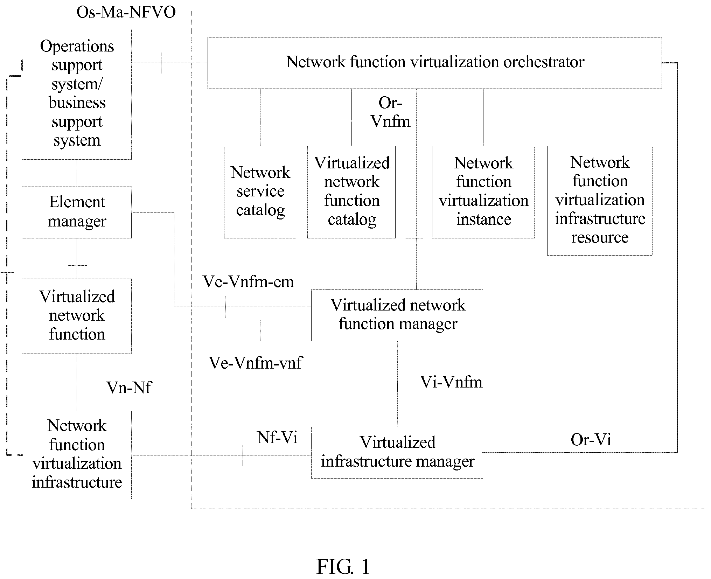

To better describe technical solutions of the present invention, referring to FIG. 1, a possible architecture of an NFV E2E (End to End, end to end) is first described. Specifically, the architecture shown in FIG. 1 may be a hardware architecture, or may be a software architecture, or may be a combination of a hardware architecture and a software architecture. This is not limited in the present invention.

Function modules shown in FIG. 1 are described as follows:
OSS (Operations Support System, operations support system)/BSS (Business support system, business support system): configured to initiate a service request to an NFV orchestrator (NFVO, network function virtualization orchestrator), provide a resource required by a service, and be responsible for troubleshooting.
NFV orchestrator: responsible for orchestrating and managing resources according to an OSS/BSS service request to implement a network service and monitor resources and running status information of a VNF (Virtualized Network Function, virtualized network function) and an NFVI (NFV Infrastructure, network function virtualization infrastructure) in real time.
VNFM (Virtualized Network Function Manager, virtualized network function manager): responsible for life cycle management of a VNF, for example, information such as a start time, time to live, and a running status of the VNF.
VIM (Virtualized Infrastructure Manager, virtualized infrastructure manager): responsible for managing and allocating a resource of the NFVI, and monitoring and collecting running status information of the NFVI.
EM (Element Manager, element manager): responsible for network element management, including network element performance monitoring, service configuration, and the like.
NS (Network Service, network service) catalog (catalog): stores all uploaded NSDs (Network Service Descriptor, network service descriptor), and supports creation and management of deployment templates such as an NSD, a VLD (Virtual Link Descriptor, virtual link descriptor), and a VNFFGD (forwarding Graph Descriptor VNF, forwarding graph descriptor).
VNF catalog: stores all uploaded VNF packages, supports creation and management of a VNFD (VNF Descriptor, virtualized network function descriptor), a software image, another list, and the like.
NFV instances repository (NFV repository): stores information about all VNF instances and NS instances.
NFVI resources repository (NFVI resources repository): stores information about an available/reserved/allocated resource of the NFVI.

Related interfaces shown in FIG. 1 are described as follows:
Ve-Vnfm: responsible for VNF life cycle management, and exchanging configuration information.
Or-Vnfin: responsible for requesting a resource for VNF life cycle management, sending configuration information, and collecting status information.
Vi-Vnfm: responsible for requesting resource allocation, and exchanging virtualized resource configuration and status information.
Or-Vi: responsible for requesting resource reservation and allocation, and exchanging virtualized resource configuration and status information.
Nf-Vi: responsible for specific resource allocation, exchanging virtualized resource status information, and hardware resource configuration.
Vn-Nf: used by the NFVI to provide an actual execution environment for a VNF.
Os-Ma: responsible for VNF life cycle management, service graph (service graph) life cycle management, policy management, and the like.

A part in the right dashed box in FIG. 1 may be referred to as an NFV-MANO (NFV Management and Orchestration, network function virtualization management and orchestration) domain. All function modules in the NFV-MANO domain may be located in one network entity, or may be separately located in different network entities, or some function modules in the NFV-MANO domain may be located in one network entity. There are multiple specific implementations, and no specific implementation is limited in the present invention.

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

In addition, the terms "system" and "network" may be used interchangeably in this specification. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

The following further describes the embodiments of the present invention in detail with reference to drawings for the specification.

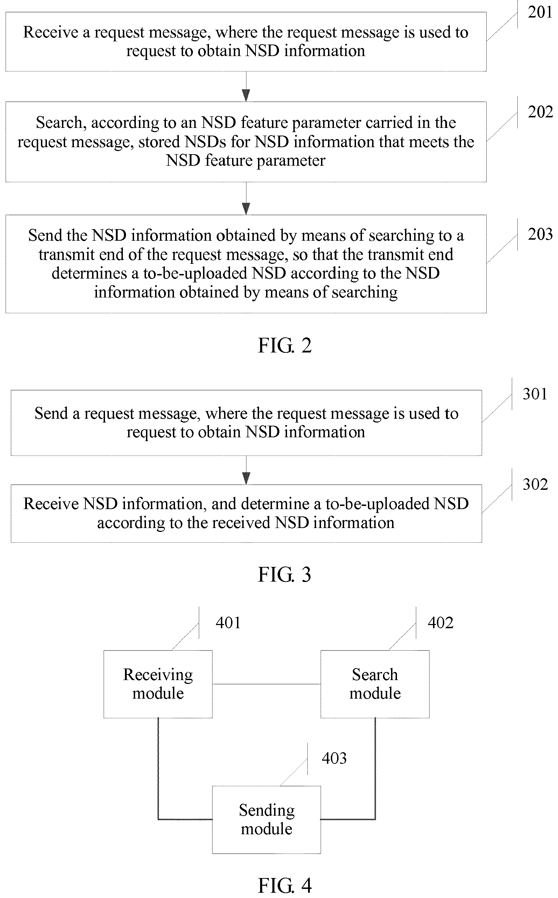

Referring to FIG. 2, an embodiment of the present invention provides a method for determining a to-be-uploaded NSD. For an architecture on which the method is based, refer to FIG. 1. Specifically, the method may be executed by a specific module. The module may be a hardware module, or may be a software module, for example, the module is referred to as an NS pool (network service pool). The module may be a module that exists alone, for example, the module may be a separate network element. Alternatively, the module may be located in another network element, that is, a function of the module may be implemented by an existing network element. For example, the module may be located in an NFVO, and used as a function module of the NFVO. A main procedure of the method is described as follows:
Step 201: Receive a request message, where the request message is used to request to obtain NSD information.

In this embodiment of the present invention, the NS pool may store at least one NSD. These NSDs may be provided for the NS pool by an operator, an NS design vendor, or the like. Specifically, these NSDs may be actively provided for the NS pool by the operator, the NS design vendor, or the like, or may be obtained after the NS pool makes a request to the operator or the NS design vendor.

Therefore, in this embodiment of the present invention, when a sender needs to upload an NSD, the sender may send a request message to the NS pool, so as to request to obtain NSD information. In this embodiment of the present invention, the sender may be, for example, an operator or an NS design vendor.

Optionally, in this embodiment of the present invention, the NSD information may be NSD description information, that is, information used to describe an NSD. For example, description information of an NSD may include information such as a manufacturer of the NSD. An NSD may be uniquely determined according to description information of the NSD. Alternatively, the NSD information may be an NSD. That is, the sender may request to obtain the NSD description information, or may request to obtain the NSD by sending the request message. A specific requested form may be specified by the sender in the request message, or may be independently selected by the NS pool, or may be agreed upon in advance by the sender and the NS pool. This is not limited in the present invention.

In this embodiment of the present invention, an NSD may have multiple different feature parameters. For example, feature parameters of an NSD may include NS availability, service QoS (Quality of Service, quality of service), a service type, an NS topology structure, a specific policy, an SLA (Service Level Agreement, service level agreement), and the like. When sending the request message, the sender usually requests a specific NSD or a specific type of NSD. Therefore, the sender may add an NSD feature parameter to the request message. Specifically, the request message may carry only one NSD feature parameter, for example, a request message carries only an SLA. Alternatively, the request message may carry multiple NSD feature parameters, for example, a request message carries an SLA, a service type, service QoS, and the like. Specifically, a quantity, a type, and the like of feature parameters carried in the request message may be determined by the sender according to a requirement.

Optionally, in this embodiment of the present invention, if the NS pool is a separate network element, the sender may directly send the request message to the NS pool. If the NS pool is located in the NFVO, the sender may send the request message to the NFVO, and the NFVO attempts to authenticate the sender of the request message (for example, attempts to authenticate whether the sender of the request message is an authorized user); and if the authentication succeeds, the NFVO forwards the request message to the NS pool for processing.

That is, if the NS pool is a separate network element, information exchange may be directly performed between the sender and the NS pool; or if the NS pool is located in the NFVO, information exchange between the sender and the NS pool needs to be performed by using the NFVO.

Step 202: Search, according to an NSD feature parameter carried in the request message, stored NSDs for NSD information that meets the NSD feature parameter.

In this embodiment of the present invention, after receiving the request message, the NS pool parses the request message, so as to obtain the NSD feature parameter carried in the request message.

After obtaining the NSD feature parameter carried in the request message, the NS pool may search the stored NSDs for the NSD information that meets the NSD feature parameter carried in the request message. That is, the NS pool may search the stored NSDs for NSDs whose feature parameters meet the NSD feature parameter carried in the request message. In this embodiment of the present invention, if a stored NSD meets an NSD requested by the request message, feature parameters of the stored NSD are required to meet all NSD feature parameters carried in the request message.

For example, the request message carries two feature parameters: a service type and service QoS, and the NS pool stores two NSDs in total: an NSD 1 and an NSD 2. A value of a service type of the NSD 1 is consistent with a value of the service type carried in the request message, a value of service QoS is consistent with a value of the service QoS carried in the request message, a value of a service type of the NSD 2 is consistent with the value of the service type carried in the request message, and a value of service QoS is inconsistent with the value of the service QoS carried in the request message. Therefore, it may be considered that the NSD 1 meets the request message, while the NSD 2 does not meet the request message. Consistency between values of a feature parameter in this embodiment of the present invention may mean that the values of the feature parameter are the same, or may mean that the values of the feature parameter meet a uniform requirement. Specific requirements vary according to different feature parameters. Specifically, a manner for evaluating consistency between two values of a feature parameter may be specified by a standard or a protocol, or may be independently set.

Step 203: Send the found NSD information to a transmit end of the request message, so that the transmit end determines a to-be-uploaded NSD according to the found NSD information.

In this embodiment of the present invention, if the NS pool is a separate network element, the NS pool directly sends the found NSD information to the sender; or if the NS pool is located in the NFVO, the NS pool sends, by using the NFVO, the found NSD information to the sender.

Optionally, in this embodiment of the present invention, that the found NSD information is sent to a transmit end of the request message includes:
sending all or some of the found NSD information to the transmit end of the request message.

For example, if five pieces of NSD information in total are obtained by means of searching, the NS pool may send all of the five pieces of NSD information to the sender, or the NS pool may send only three pieces of NSD information in the five pieces of NSD information to the sender, or the NS pool may send only one piece of NSD information in the five pieces of NSD information to the sender.

In this embodiment of the present invention, if the NS pool sends multiple pieces of NSD information to the sender, during sending, the NS pool may sort these pieces of NSD information according to a specific rule such as costs, or may randomly sort these pieces of NSD information.

Optionally, in this embodiment of the present invention, that some of the found NSD information is sent to the transmit end of the request message includes:
selecting first NSD information from the found NSD information; and
sending the first NSD information to the transmit end of the request message.

That is, in this embodiment of the present invention, after obtaining the NSD information, the NS pool may send all of the NSD information to the sender, or may send M pieces of NSD information in the NSD information to the sender, where M is an integer greater than 1, and the sender independently selects a to-be-uploaded NSD from the M pieces of NSD information, so that a selection result can meet a requirement of the sender as much as possible.

Alternatively, in this embodiment of the present invention, after obtaining the NSD information, the NS pool may select one piece of NSD information from the NSD information, where the selected NSD information is referred to as first NSD information in this embodiment of the present invention; and directly send the first NSD information to the sender. The sender does not need to select NSD information, and the sender only needs to determine whether to upload an NSD corresponding to the first NSD information, thereby reducing a workload of the sender. Certainly, if the NS pool selects one piece of NSD information from the obtained NSD information, the sender may inform the NS pool of a selection basis of the sender in advance, that is, a specific type of NSD information that the sender expects to select. The sender may send the selection basis to the NS pool by adding the selection basis to the request message when sending the request message, or may separately send the selection basis.

Optionally, in this embodiment of the present invention, after the found NSD information is sent to the transmit end of the request message, the method further includes:
receiving an upload confirmation message that is sent by the transmit end and that is used to confirm uploading of the NSD corresponding to the first NSD information, where the first NSD information is one piece of information in the found NSD information.

If the NS pool is a separate network element, the NS pool directly receives the upload confirmation message sent by the sender. If the NS pool is located in the NFVO, the sender sends the upload confirmation message to the NFVO, and the NFVO attempts to authenticate the sender of the upload confirmation message; and if the authentication succeeds, the NFVO directly obtains, from the NS pool, the NSD corresponding to the first NSD information for uploading.

In this embodiment of the present invention, if the NS pool sends multiple pieces of NSD information to the sender, the sender may select one piece of information from the multiple pieces of NSD information, for example, the selected NSD information is referred to as the first NSD information; and the sender returns the upload confirmation message to the NS pool, where the upload confirmation message may carry the first NSD information. The NS pool receives the upload confirmation message, and determines to upload the NSD corresponding to the first NSD information.

If the NS pool sends only one piece of NSD information, that is, the first NSD information, to the sender, the sender may determine whether to upload the first NSD information. If the sender determines to upload the first NSD information, the sender returns the upload confirmation message to the NS pool, where the upload confirmation message is, for example, an ACK (Confirmation, confirmation). The NS pool receives the upload confirmation message, and determines to upload the NSD corresponding to the first NSD information. However, if the sender determines not to upload the first NSD information, the sender returns an upload cancellation message to the NS pool, where the upload cancellation message is, for example, a NACK (Negative Confirmation, negative confirmation). If the NS pool receives the upload cancellation message, an operation stops, and a procedure ends. If the NS pool is a separate network element, the NS pool directly receives the upload cancellation message sent by the sender; or if the NS pool is located in the NFVO, the sender sends the upload cancellation message to the NFVO, and the NFVO forwards the upload cancellation message to the NS pool after authenticating the sender of the upload cancellation message.

In this embodiment of the present invention, specifically, the NSD corresponding to the first NSD information may be uploaded by the NS pool, or may be uploaded by the sender. The following describes different cases.

In a first case, the NSD information is NSD description information, and the NSD corresponding to the first NSD information is uploaded by the NS pool.

After the NS pool receives the upload confirmation message sent by the sender, and determines to upload the NSD corresponding to the first NSD information, the NS pool may directly upload the NSD corresponding to the first NSD information.

If the NS pool is a separate network element, the NS pool needs to send the NSD corresponding to the first NSD information to an NFVO, so as to complete uploading.

If the NS pool is located in the NFVO, the upload confirmation message is received by the NFVO, and the NFVO may obtain the NSD corresponding to the first NSD information from the NS pool, so as to complete uploading.

In a second case, the NSD information is NSD description information, and the NSD corresponding to the first NSD information is uploaded by the sender.

The NS pool receives the upload confirmation message sent by the sender, and determines to upload the NSD corresponding to the first NSD information. If the NS pool is a separate network element, the NS pool may send the NSD corresponding to the first NSD information to the sender; or if the NS pool is located in the NFVO, the NS pool sends, by using the NFVO, the NSD corresponding to the first NSD information to the sender.

After receiving the NSD corresponding to the first NSD information, the sender sends the NSD corresponding to the first NSD information to the NFVO, so as to complete uploading.

In a third case, the NSD information is an NSD, and the NSD corresponding to the first NSD information is uploaded by the NS pool.

The third case is similar to the first case, and details are not described.

In a fourth case, the NSD information is an NSD, and the NSD corresponding to the first NSD information is uploaded by the sender.

The sender sends the upload confirmation message to the NS pool, and determines to upload the NSD corresponding to the first NSD information.

In addition, the sender sends the NSD corresponding to the first NSD information to the NFVO, so as to complete uploading.

In this embodiment of the present invention, for a specific process of uploading the NSD after the NFVO receives the NSD, refer to the prior art, and details are not described herein.

Optionally, in this embodiment of the present invention, the method may further include:
receiving at least one NSD sent by a transmit end, and storing the received NSD.

The step may be performed between step 201 and step 203, or may be performed before step 201, or may be performed after step 203. That is, the NS pool may collect and store NSDs in advance, so that an NSD can be directly selected from the stored NSDs when the sender needs to upload the NSD. An NSD does not need to be generated when the sender needs to upload the NSD. Therefore, an NSD uploading time is reduced, and NSD uploading efficiency is improved.

Referring to FIG. 3, based on a same inventive concept, an embodiment of the present invention provides another method for determining a to-be-uploaded NSD. The method may be executed by the foregoing sender. A main procedure of the method is described as follows:
Step 301: Send a request message, where the request message is used to request to obtain NSD information.

In this embodiment of the present invention, when a sender needs to upload an NSD, the sender may send a request message to an NS pool, so as to request to obtain NSD information. The request message carries one or more NSD feature parameters.

Optionally, in this embodiment of the present invention, the NSD information is NSD description information or an NSD.

Step 302: Receive NSD information, and determine a to-be-uploaded NSD according to the received NSD information.

In this embodiment of the present invention, after receiving the request message, the NS pool searches stored NSDs for NSDs that meet a condition, and sends the found NSD information to the sender, and the sender may determine the to-be-uploaded NSD from the NSD information.

In this embodiment of the present invention, after obtaining the NSD information, the NS pool may send all of the NSD information to the sender, or may send M pieces of NSD information in the NSD information to the sender, where M is an integer greater than 1; and the sender independently selects a to-be-uploaded NSD from the M pieces of NSD information, so that a selection result can meet a requirement of the sender as much as possible.

Alternatively, in this embodiment of the present invention, after obtaining the NSD information, the NS pool may select one piece of NSD information from the NSD information, where the selected NSD information is referred to as first NSD information in this embodiment of the present invention; and directly send the first NSD information to the sender. The sender does not need to select NSD information, and the sender only needs to determine whether to upload an NSD corresponding to the first NSD information, thereby reducing a workload of the sender.

Specifically, a manner for obtaining the NSD information by means of searching by the NS pool, and a manner for determining NSD information sent by the NS pool to the sender are described in the procedure in FIG. 2.

Optionally, in this embodiment of the present invention, after the to-be-uploaded NSD is determined according to the received NSD information, the method further includes:
sending, to a receive end of the request message, an upload confirmation message used to confirm uploading of the NSD corresponding to the first NSD information, where the first NSD information is one piece of information in the received NSD information.

If the sender determines to upload the NSD corresponding to the first NSD information, the sender sends the upload confirmation message to the NS pool.

If the NS pool returns multiple pieces of NSD information to the sender, the sender may select the first NSD information from the multiple pieces of NSD information, that is, determine to upload the NSD corresponding to the first NSD information, and return the upload confirmation message to the NS pool. Certainly, if the sender considers that the NSD information sent by the NS pool does not include NSD information corresponding to an NSD that needs to be uploaded, the sender may send an upload cancellation message to the NS pool. If the NS pool receives the upload cancellation message, an operation stops, and a procedure ends.

If the NS pool returns only one piece of NSD information to the sender, that is, the first NSD information, the sender may determine whether to upload the NSD corresponding to the first NSD information. If the sender determines to upload the NSD, the sender sends the upload confirmation message to the NS pool; or if the sender determines not to upload the NSD, the sender sends the upload cancellation message to the NS pool. If the NS pool receives the upload cancellation message, an operation stops, and a procedure ends.

Optionally, in this embodiment of the present invention, when the NSD information is NSD description information, after the upload confirmation message is sent to the receive end of the request message, the method further includes:
receiving the NSD that is corresponding to the first NSD information and that is sent by the receive end of the request message; and
uploading the received NSD.

Several specific uploading cases are described in the procedure in FIG. 2.

The method further includes:
sending an NSD to the receive end of the request message, so that the receive end of the request message stores the received NSD.

The step may be performed between step 301 and step 302, or may be performed before step 301, or may be performed after step 302. That is, the sender may send the NSD to the NS pool in advance. The NSD sent to the NS pool may be generated by the sender, or may be purchased by the sender, or the like. The NS pool may collect and store NSDs in advance, so that an NSD can be directly selected from the stored NSDs when the sender needs to upload the NSD. An NSD does not need to be generated when the sender needs to upload the NSD. Therefore, an NSD uploading time is reduced, and NSD uploading efficiency is improved.

In this embodiment of the present invention, for example, the determining of a to-be-uploaded NSD in the procedure in FIG. 2 may be executed by an NS pool, and the NS pool stores, for example, at least one NSD. When a sender needs to upload an NSD, it is only required to search the NS pool for NSDs that meet a requirement. If there are NSDs that meet the requirement, a to-be-uploaded NSD may be directly determined from the NSDs, and the NSD may be directly uploaded after being determined. An NS pool is provided to determine a to-be-uploaded NSD, and NSDs are pre-stored in the NS pool. When an NSD needs to be uploaded, an appropriate NSD may be directly selected from the NS pool for uploading; and when an NSD needs to be uploaded, the NSD does not need to be generated before being uploaded. Therefore, a time required for uploading an NSD is reduced, and network service generation efficiency is improved.

The following describes apparatuses in embodiments of the present invention with reference to the accompanying drawings.

Referring to FIG. 4, based on a same inventive concept, an embodiment of the present invention provides an apparatus for determining a to-be-uploaded NSD. The apparatus may include a receiving module 401, a search module 402, and a sending module 403. Preferably, the apparatus may be the foregoing NS pool.

The receiving module 401 is configured to receive a request message, where the request message is used to request to obtain NSD information.

The search module 402 is configured to search, according to an NSD feature parameter carried in the request message, stored NSDs for NSD information that meets the NSD feature parameter.

The sending module 403 is configured to send the found NSD information to a transmit end of the request message, so that the transmit end determines a to-be-uploaded NSD according to the found NSD information.

Optionally, in this embodiment of the present invention, the NSD information is NSD description information or an NSD.

Optionally, in this embodiment of the present invention, the apparatus further includes an upload module.

The receiving module 401 is further configured to: after the found NSD information is sent to the transmit end of the request message, receive an upload confirmation message that is sent by the transmit end and that is used to confirm uploading of an NSD corresponding to first NSD information, where the first NSD information is one piece of information in the found NSD information.

The upload module is configured to upload the NSD corresponding to the first NSD information.

Optionally, in this embodiment of the present invention, when the NSD information is NSD description information,
the receiving module 401 is further configured to: after the sending module 403 sends the found NSD information to the transmit end, receive an upload confirmation message that is sent by the transmit end and that is used to confirm uploading of an NSD corresponding to first NSD information, where the first NSD information is one piece of information in the found NSD information; and
the sending module 403 is further configured to send the NSD corresponding to the first NSD information to the transmit end, so that the transmit end uploads the NSD corresponding to the first NSD information.

Optionally, in this embodiment of the present invention, the sending module 403 is specifically configured to:
send all or some of the found NSD information to the transmit end of the request message.

Optionally, in this embodiment of the present invention, that the sending module 403 is specifically configured to send some of the found NSD information to the transmit end of the request message is specifically:
selecting the first NSD information from the found NSD information; and
sending the first NSD information to the transmit end of the request message.

Optionally, in this embodiment of the present invention, the receiving module 401 is further configured to:
receive at least one NSD sent by a transmit end, and store the received NSD.

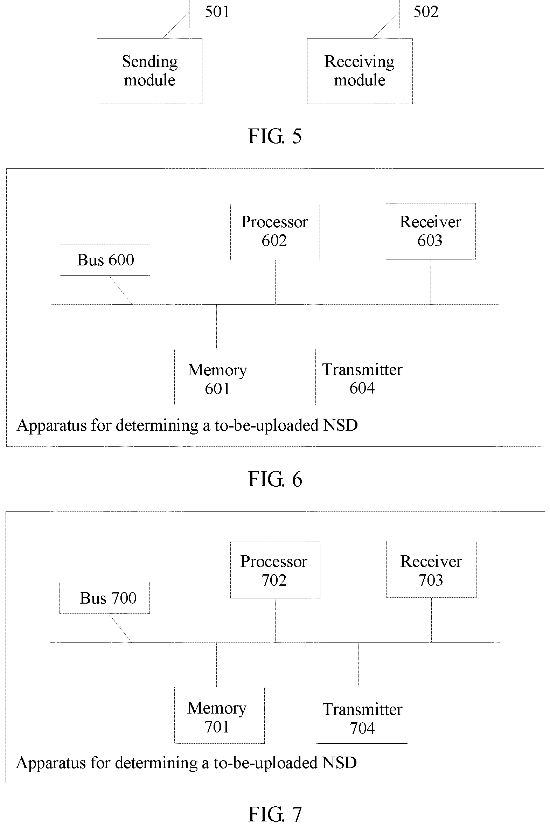

Referring to FIG. 5, based on a same inventive concept, an embodiment of the present invention provides another apparatus for determining a to-be-uploaded NSD. The apparatus may include a sending module 501 and a receiving module 502. Preferably, the apparatus may be the foregoing sender.

The sending module 501 is configured to send a request message, where the request message is used to request to obtain NSD information.

The receiving module 502 is configured to receive NSD information, and determine a to-be-uploaded NSD according to the received NSD information.

Optionally, in this embodiment of the present invention, the NSD information is NSD description information or an NSD.

Optionally, in this embodiment of the present invention, the sending module 501 is further configured to:
after the receiving module 502 determines the to-be-uploaded NSD according to the received NSD information, send, to a receive end of the request message, an upload confirmation message used to confirm uploading of an NSD corresponding to first NSD information, where the first NSD information is one piece of information in the received NSD information.

Optionally, in this embodiment of the present invention, the apparatus further includes an upload module, and when the NSD information is NSD description information,
the receiving module 502 is further configured to: after the sending module 501 sends the upload confirmation message to the receive end of the request message, receive the NSD that is corresponding to the first NSD information and that is sent by the receive end of the request message; and
the upload module is configured to upload the received NSD.

Optionally, in this embodiment of the present invention, the sending module 501 is further configured to:
send an NSD to the receive end of the request message, so that the receive end of the request message stores the received NSD.

Referring to FIG. 6, based on a same inventive concept, an embodiment of the present invention provides an apparatus for determining a to-be-uploaded NSD. The apparatus includes a memory 601, a processor 602, a receiver 603, and a transmitter 604 that are connected to a bus 600. The receiver 603 and the transmitter 604 may be a same module, or may be different modules. Preferably, the apparatus may be the foregoing NS pool.

The memory 601 is configured to store an instruction required by the processor 602 to execute a task.

The receiver 603 is configured to receive a request message, where the request message is used to request to obtain NSD information.

The processor 602 is configured to execute the instruction stored in the memory 601, search, according to an NSD feature parameter carried in the request message, stored NSDs for NSD information that meets the NSD feature parameter, and send, by using the transmitter 604, the found NSD information to a transmit end of the request message, so that the transmit end determines a to-be-uploaded NSD according to the found NSD information.

Optionally, in this embodiment of the present invention, the NSD information is NSD description information or an NSD.

Optionally, in this embodiment of the present invention,
the receiver 603 is further configured to: after the processor 602 sends, by using the transmitter 604, the found NSD information to the transmit end of the request message, receive an upload confirmation message that is sent by the transmit end and that is used to confirm uploading of an NSD corresponding to first NSD information, where the first NSD information is one piece of information in the found NSD information; and
the processor 602 is further configured to upload the NSD corresponding to the first NSD information.

Optionally, in this embodiment of the present invention, when the NSD information is NSD description information,
the receiver 603 is further configured to: after the processor 602 sends, by using the transmitter 604, the found NSD information to the transmit end, receive an upload confirmation message that is sent by the transmit end and that is used to confirm uploading of an NSD corresponding to first NSD information, where the first NSD information is one piece of information in the found NSD information; and
the processor 602 is further configured to send, by using the transmitter 604, the NSD corresponding to the first NSD information to the transmit end, so that the transmit end uploads the NSD corresponding to the first NSD information.

Optionally, in this embodiment of the present invention, that the processor 602 is configured to send, by using the transmitter 604, the found NSD information to a transmit end of the request message is specifically:
sending, by using the transmitter 604, all or some of the found NSD information to the transmit end of the request message.

Optionally, in this embodiment of the present invention, that the processor 602 is specifically configured to send, by using the transmitter 604, some of the found NSD information to the transmit end of the request message is specifically:
selecting the first NSD information from the found NSD information; and
sending the first NSD information to the transmit end of the request message by using the transmitter 604.

Optionally, in this embodiment of the present invention,
the receiver 603 is further configured to receive at least one NSD sent by a transmit end; and
the processor 602 is further configured to store the received NSD.

Referring to FIG. 7, based on a same inventive concept, an embodiment of the present invention provides another apparatus for determining a to-be-uploaded NSD. The apparatus includes a memory 701, a processor 702, a receiver 703, and a transmitter 704 that are connected to a bus 700. The receiver 703 and the transmitter 704 may be a same module, or may be different modules. Preferably, the apparatus may be the foregoing sender.

The memory 701 is configured to store an instruction required by the processor 702 to execute a task.

The processor 702 is configured to execute the instruction stored in the memory 701, and send a request message by using the transmitter 704, where the request message is used to request to obtain NSD information.

The receiver 703 is configured to receive NSD information.

The processor 702 is further configured to determine a to-be-uploaded NSD according to the received NSD information.

Optionally, in this embodiment of the present invention, the NSD information is NSD description information or an NSD.

Optionally, in this embodiment of the present invention, the processor 702 is further configured to:
after determining the to-be-uploaded NSD according to the received NSD information, send, to a receive end of the request message by using the transmitter 704, an upload confirmation message used to confirm uploading of an NSD corresponding to first NSD information, where the first NSD information is one piece of information in the received NSD information.

Optionally, in this embodiment of the present invention, when the NSD information is NSD description information,
the receiver 703 is further configured to: after the processor 702 sends the upload confirmation message to the receive end of the request message by using the transmitter 704, receive the NSD that is corresponding to the first NSD information and that is sent by the receive end of the request message; and
the processor 702 is further configured to upload the received NSD.

Optionally, in this embodiment of the present invention, the processor 702 is further configured to:
send an NSD to the receive end of the request message by using the transmitter 704, so that the receive end of the request message stores the received NSD.

In the embodiments of the present invention, for example, a method for determining a to-be-uploaded NSD may be executed by a specific module, and the module stores, for example, at least one NSD. When a sender (a transmit end) needs to upload an NSD, it is only required to search the module for NSDs that meet a requirement. If there are NSDs that meet the requirement, a to-be-uploaded NSD may be directly determined from the NSDs, and the NSD may be directly uploaded after being determined. A specific module is provided to execute the method for determining a to-be-uploaded NSD, and NSDs are pre-stored in the module. When an NSD needs to be uploaded, an appropriate NSD may be directly selected from the NSDs for uploading; and when there is a service requirement, an NSD does not need to be generated before being uploaded. Therefore, a time required for uploading an NSD is reduced, and network service generation efficiency is improved.

Especially when there is an urgent service requirement, the technical solutions in the embodiments of the present invention can achieve a better effect. When there is an urgent service requirement, uploading of an NSD generally needs to be completed as soon as possible, and apparently, the requirement can be met by using the technical solutions in the embodiments of the present invention. Therefore, network service generation efficiency is improved, and user experience is enhanced.

It may be clearly understood by persons skilled in the art that, for the purpose of convenient and brief description, division of the foregoing function modules is taken as an example for illustration. In actual application, the foregoing functions can be allocated to different function modules and implemented according to a requirement, that is, an inner structure of an apparatus is divided into different function modules to implement all or some of the functions described above. For a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the module or unit division is merely logical function division and may be other division in actual implementation. For example, multiple units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, function units in the embodiments of the present application may be integrated into one processing unit, or each of the units may exist alone physically, or two or more units are integrated into one unit. The integrated unit may be implemented in a form of hardware, or may be implemented in a form of a software function unit.

When the integrated unit is implemented in the form of a software function unit and sold or used as an independent product, the integrated unit may be stored in a computer-readable storage medium. Based on such an understanding, the technical solutions of the present application essentially, or the part contributing to the prior art, or all or some of the technical solutions may be implemented in the form of a software product. The software product is stored in a storage medium and includes several instructions for instructing a computer device (which may be a personal computer, a server, or a network device) or a processor (processor) to perform all or some of the steps of the methods described in the embodiments of the present application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

The foregoing embodiments are merely used to describe the technical solutions of the present application. The foregoing embodiments are merely intended to help understand the method and core idea of the present invention, and shall not be construed as a limitation on the present invention. Any variation or replacement readily figured out by persons skilled in the art within the technical scope disclosed in the present invention shall fall within the protection scope of the present invention.

## Claims

1. A method for determining a to-be-uploaded network service descriptor, NSD, performed by an NS pool comprising:
receiving (201) a request message, wherein the request message is used to request to obtain NSD information;
searching (202), according to an NSD feature parameter carried in the request message, stored NSDs for NSD information that meets the NSD feature parameter;
sending (203) the found NSD information to a transmit end of the request message, so that the transmit end determines a to-be-uploaded NSD according to the found NSD information;
wherein the NSD information is NSD description information or an NSD; and
after the sending the found NSD information to a transmit end of the request message, the method further comprises:
receiving an upload confirmation message, comprising a first NSD information, that is sent by the transmit end and that is used to confirm uploading of an NSD corresponding to the first NSD information, wherein the first NSD information is one piece of information in the found NSD information; and
uploading the NSD corresponding to the first NSD information to a Network Function Virtualization Orchestrator, NFVO.

2. The method according to claim 1, wherein the sending the found NSD information to a transmit end of the request message comprises:
sending all or some of the found NSD information to the transmit end of the request message.

3. The method according to claim 2, wherein the sending some of the found NSD information to the transmit end of the request message comprises:
selecting the first NSD information from the found NSD information; and
sending the first NSD information to the transmit end of the request message.

4. The method according to any one of claims 1 to 3, wherein the method further comprises:
receiving an NSD sent by the transmit end, and storing the received NSD.

5. An apparatus for determining a to-be-uploaded network service descriptor, NSD, comprising:
a receiving module (401), configured to receive a request message, wherein the request message is used to request to obtain NSD information;
a search module (402), configured to search, according to an NSD feature parameter carried in the request message, stored NSDs for NSD information that meets the NSD feature parameter;
a sending module (403), configured to send the found NSD information to a transmit end of the request message, so that the transmit end is able to determine a to-be-uploaded NSD according to the found NSD information;
wherein the NSD information is NSD description information or an NSD; and
the receiving module is further configured to: after the found NSD information is sent to the transmit end of the request message, receive an upload confirmation message, comprising a first NSD information, that is sent by the transmit end and that is used to confirm uploading of an NSD corresponding to the first NSD information, wherein the first NSD information is one piece of information in the found NSD information; and
an upload module, configured to upload the NSD corresponding to the first NSD information to a Network Function Virtualization Orchestrator, NFVO.

6. The apparatus according to claim 5, wherein the sending module is specifically configured to:
send all or some of the found NSD information to the transmit end of the request message.

7. The apparatus according to claim 5, wherein that the sending module is specifically configured to send some of the found NSD information to the transmit end of the request message is specifically:
selecting the first NSD information from the found NSD information; and
sending the first NSD information to the transmit end of the request message.

8. The apparatus according to any one of claims 5 to 7, wherein the receiving module is further configured to:
receive at least one NSD sent by a transmit end, and store the received NSD.

## Patentansprüche

1. Verfahren zum Bestimmen eines hochzuladenden Netzwerkdienstbeschreibers, NSD, der von einem NS-Pool ausgeführt wird, aufweisend:
Empfangen (201) einer Anfragenachricht, wobei die Anfragenachricht verwendet wird, um anzufragen, NSD-Informationen zu erhalten;
Suchen (202) gemäß einem NSD-Merkmalparameter, der in der Anfragenachricht getragen wird, gespeicherter NSDs für NSD-Informationen, die den NSD-Merkmalparameter erfüllen;
Senden (203) der gefundenen NSD-Informationen an ein Übertragungsende der Anfragenachricht, sodass das Übertragungsende einen hochzuladenden NSD gemäß den gefundenen NSD-Informationen bestimmt;
wobei die NSD-Informationen NSD-Beschreibungsinformationen oder ein NSD sind; und
nach dem Senden der gefundenen NSD-Informationen an ein Übertragungsende der Anfragenachricht, das Verfahren ferner aufweisend:
Empfangen einer Hochladebestätigungsnachricht, aufweisend erste NSD-Informationen, die durch das Übertragungsende gesendet werden und die verwendet werden, um Hochladen eines NSD entsprechend den ersten NSD-Informationen zu bestätigen,
wobei die ersten NSD-Informationen eine Information in den gefundenen NSD-Informationen sind; und
Hochladen des NSD, entsprechend den ersten NSD-Informationen zu einem Netzwerkfunktionsvirtualisierungsorchestrierer, NFVO.

2. Verfahren nach Anspruch 1, wobei das Senden der gefundenen NSD-Informationen an ein Übertragungsende der Anfragenachricht aufweist:
Senden aller oder einiger der gefundenen NSD-Informationen an das Übertragungsende der Anfragenachricht.

3. Verfahren nach Anspruch 2, wobei das Senden einiger der gefundenen NSD-Informationen an das Übertragungsende der Anfragenachricht aufweist:
Auswählen der ersten NSD-Informationen aus den gefundenen NSD-Informationen; und
Senden der ersten NSD-Informationen an das Übertragungsende der Anfragenachricht.

4. Verfahren nach einem der Ansprüche 1 bis 3, wobei das Verfahren ferner aufweist:
Empfangen eines NSD, der durch das Übertragungsende gesendet wird, und Speichern des empfangenen NSD.

5. Vorrichtung zum Bestimmen eines hochzuladenden Netzwerkdienstbeschreibers, NSD, aufweisend:
ein Empfangsmodul (401), das konfiguriert ist, eine Anfragenachricht zu empfangen, wobei die Anfragenachricht verwendet wird, um anzufragen, NSD-Informationen zu erhalten;
ein Suchmodul (402), das konfiguriert ist, gemäß einem NSD-Merkmalparameter, der in der Anfragenachricht getragen wird, gespeicherte NSDs für NSD-Informationen, die den NSD-Merkmalparameter erfüllen, zu suchen;
ein Sendemodul (403), das konfiguriert ist, die gefundenen NSD-Informationen an ein Übertragungsende der Anfragenachricht zu senden, sodass das Übertragungsende fähig ist, einen hochzuladenden NSD gemäß den gefundenen NSD-Informationen zu bestimmen;
wobei die NSD-Informationen NSD-Beschreibungsinformationen oder ein NSD sind; und
das Empfangsmodul ferner konfiguriert ist zum: nachdem die gefundenen NSD-Informationen an ein Übertragungsende der Anfragenachricht gesendet wurden, Empfangen einer Hochladebestätigungsnachricht, aufweisend erste NSD-Informationen, die durch das Übertragungsende gesendet werden und die verwendet werden, um Hochladen eines NSD entsprechend den ersten NSD-Informationen zu bestätigen, wobei die ersten NSD-Informationen eine Information in den gefundenen NSD-Informationen sind; und
ein Hochlademodul, das zum Hochladen des NSD, entsprechend den ersten NSD-Informationen, zu einem Netzwerkfunktionsvirtualisierungsorchestrierer, NFVO, konfiguriert ist.

6. Vorrichtung nach Anspruch 5, wobei das Sendemodul insbesondere konfiguriert ist zum:
Senden aller oder einiger der gefundenen NSD-Informationen an das Übertragungsende der Anfragenachricht.

7. Vorrichtung nach Anspruch 5, wobei, dass das Sendemodul insbesondere konfiguriert ist, einige der gefundenen NSD-Informationen an das Übertragungsende der Anfragenachricht zu senden, insbesondere dient zum:
Auswählen der ersten NSD-Informationen aus den gefundenen NSD-Informationen; und
Senden der ersten NSD-Informationen an das Übertragungsende der Anfragenachricht.

8. Vorrichtung nach einem der Ansprüche 5 bis 7, wobei das Empfangsmodul ferner konfiguriert ist zum:
Empfangen mindestens eines NSD, der durch ein Übertragungsende gesendet wird, und Speichern des empfangenen NSD.

## Revendications

1. Procédé permettant de déterminer un descripteur de service réseau, NSD (network service descriptor), à télécharger, réalisé par un groupe de services de réseau NS (network service) comprenant les étapes consistant à :
recevoir (201) un message de demande, dans lequel le message de demande est utilisé pour demander d'obtenir des informations NSD ;
rechercher (202), en fonction d'un paramètre de fonctionnalité NSD acheminé dans le message de demande, des NSD mémorisés pour des informations NSD correspondant au paramètre de fonctionnalité NSD ;
envoyer (203) des informations NSD trouvées à une extrémité d'émission du message de demande, de sorte que l'extrémité d'émission détermine un NSD à télécharger, en fonction des informations NSD trouvées ;
dans lequel les informations NSD sont des informations de description de NSD ou un NSD ; et
après l'envoi des informations NSD trouvées à une extrémité d'émission du message de demande, le procédé comprend en outre les étapes consistant à :
recevoir un message de confirmation de téléchargement, comprenant une première information NSD, envoyée par l'extrémité d'émission et utilisée pour confirmer le téléchargement d'un NSD correspondant à la première information NSD,
dans lequel la première information NSD est une information contenue dans les informations NSD trouvées ; et
télécharger le NSD correspondant à la première information NSD vers un orchestrateur de virtualisation de fonction réseau, NFVO (Network Function Virtualization Orchestrator).

2. Procédé selon la revendication 1, dans lequel l'envoi des informations NSD trouvées à une extrémité d'émission du message de demande comprend l'étape consistant à :
envoyer toutes les informations NSD trouvées ou certaines d'entre elles à l'extrémité d'émission du message de demande.

3. Procédé selon la revendication 2, dans lequel l'envoi de certaines des informations NSD trouvées à l'extrémité d'émission du message de demande comprend les étapes consistant à :
sélectionner la première information NSD parmi les informations NSD trouvées ; et
envoyer la première information NSD à l'extrémité d'émission du message de demande.

4. Procédé selon l'une quelconque des revendications 1 à 3, dans lequel le procédé comprend en outre l'étape consistant à :
recevoir un NSD envoyé par l'extrémité d'émission, et stocker le NSD reçu.

5. Appareil permettant de déterminer un descripteur de service de réseau, NSD, à télécharger, comprenant :
un module de réception (401), configuré pour recevoir un message de demande, dans lequel le message de demande est utilisé pour demander d'obtenir des informations NSD ;
un module de recherche (402), configuré pour rechercher, en fonction d'un paramètre de fonctionnalité NSD acheminé dans le message de demande, des NSD mémorisés pour des informations NSD correspondant au paramètre de fonctionnalité NSD ;
un module d'envoi (403), configuré pour envoyer les informations NSD trouvées à une extrémité d'émission du message de demande, de sorte que l'extrémité d'émission puisse déterminer un NSD à télécharger, en fonction des informations NSD trouvées ;
dans lequel les informations NSD sont des informations de description de NSD ou un NSD ; et
le module de réception est en outre configuré pour : après l'envoi des informations NSD trouvées à l'extrémité d'émission du message de demande, recevoir un message de confirmation de téléchargement, comprenant une première information NSD, envoyée par l'extrémité d'émission et utilisée pour confirmer le téléchargement d'un NSD correspondant à la première information NSD, dans lequel la première information NSD est une information contenue dans les informations NSD trouvées ; et
un module de téléchargement, configuré pour télécharger le NSD correspondant à la première information NSD vers un orchestrateur de virtualisation de fonction réseau, NFVO.

6. Appareil selon la revendication 5, dans lequel le module d'envoi est en particulier configuré pour :
envoyer toutes les informations NSD trouvées ou certaines d'entre elles à l'extrémité d'émission du message de demande.

7. Appareil selon la revendication 5, dans lequel le fait que le module d'envoi est en particulier configuré pour envoyer certaines des informations NSD trouvées à l'extrémité d'émission du message de demande, consiste en particulier à :
sélectionner la première information NSD parmi les informations NSD trouvées ; et
envoyer la première information NSD à l'extrémité d'émission du message de demande.

8. Appareil selon l'une quelconque des revendications 5 à 7, dans lequel le module de réception est en outre configuré pour :
recevoir au moins un NSD envoyé par une extrémité d'émission et stocker le NSD reçu.
